# EUROPÄISCHE PATENTSCHRIFT

(11) **EP 2 399 050 B1**
(45) Veröffentlichungstag und Bekanntmachung des Hinweises auf die Patenterteilung: **15.01.2014**
(21) Anmeldenummer: 09805903.3
(22) Anmeldetag: 04.12.2009
(51) Int. Cl.: F16J 9/20

(54) **KOMPRESSIONSKOLBENRING**
COMPRESSION PISTON RING
SEGMENT DE PISTON DE COMPRESSION

(30) Priorität: 19.02.2009 DE 102009009744
(43) Veröffentlichungstag der Anmeldung: 28.12.2011
(73) Patentinhaber: Federal-Mogul Burscheid GmbH, 51399 Burscheid (DE)
(72) Erfinder: ESSER, Peter-Klaus, 51515 Kürten (DE)
(74) Vertreter: Döpp, Ludger
(86) Internationale Anmeldenummer: PCT/DE2009/001716
(87) Internationale Veröffentlichungsnummer: WO 2010/094247

(56) Entgegenhaltungen:
- EP-A2- 0 937 922
- DE-A1- 10 011 917
- DE-A1-102004 021 361
- JP-A- 2002 039 384
- US-A- 281 545
- US-A- 1 467 408
- US-A- 1 585 422
- US-A- 2 234 159
- US-A- 2 519 683
- US-A1- 2006 102 131

## Beschreibung

Die Erfindung betrifft einen Kompressionskolbenring für eine Brennkraftmaschine gemäß gattungsbildendem Teil des ersten Patentanspruchs.

Die DE 103 22 032 B3 offenbart einen Kompressionskolbenring für Kolben von Brennkraftmaschinen oder Verdichtern, mit einer eine Nut aufweisenden Lauffläche einer inneren Umfangsfläche, dazwischen verlaufenden oberen und unteren Flanken sowie einen durch einen Schlitz gebildeten Stoß. Die Nut ist in der Lauffläche im Bereich des Stoßes unterbrochen. Die Nut ist mit einer in Richtung der oberen Flanke verlaufenden Hinterschneidung versehen. Die Lauffläche ist mit einer gekrümmten Kontur versehen, wobei im Bereich der inneren Umfangsfläche eine warmfeste Schlauchfeder angeordnet ist.

Durch die DE 100 11 917 A1 ist ein Kolbenring für Brennkraftmaschinen bekannt geworden, mit einer zumindest im Bereich der Lauffläche vorgesehenen Verschleißschutzschicht, die nach dem PVD- oder CVD-Verfahren aufgebracht ist.

Der US 1,585,422 ist ein Ölabstreifkolbenring zu entnehmen, der zwei Stege im Bereich seiner Lauffläche aufweist. Beide Stege sind gerundet ausgebildet und verlaufen anschließend parallel zu einer Zylinderlauffläche wobei sie zwischen sich eine Ölauffangrinne einschließen. Beim Aufwärtshub des Kolbens gleiten die Stege auf dem Ölfilm, während sie beim Abwärtshub des Kolbens im Bereich ihrer scharfen Kanten das Öl von der Zylinderlauffläche abstreifen.

Die GB 281545 betrifft einen als mehrteiligen Packungsring ausgebildeten Kolbenring, von denen der eine einen Ölabstreifring bildet. Über eine Art Nut-Feder-Verbindung sind die beiden Ringe im Bereich ihrer einander zugewandten Stege ineinander gesetzt.

Durch die EP 0 937 922 A2 ist ein Dichtkörper bekannt geworden, der, in radialer Richtung gesehen, aus mehreren Teilen besteht. Der eigentliche, an einer Gegenlauffläche anliegende Dichtkörper besteht aus Polyimid und weist zwei Laufflächenstege auf, die zwischen sich eine umlaufende Nut einschließen.

In der US 2,234,159 wird ein dünnes Stahlsegment beschrieben, das als Ölabstreifring eingesetzt wird, der eine bessere Ölabstreifwirkung entfalten soll als wenn er mit einem Kompressionsring ohne ein derartiges Segment eingesetzt wird.

Durch die US 1,467,408 ist ein als Ölabstreifring wirkender Kolbenring bekannt geworden, beinhaltend zwei übereinander angeordnete Stege im Bereich der Lauffläche, wobei beide Stege in Kontakt mit einer Gegenlauffläche eine Lauffläche bilden. Der obere Steg verläuft unter einem definierten Winkel zur Gegenlauffläche und ist mit einer Innenfase versehen. Über radial verlaufende schmale Ausnehmungen wird abgestreiftes Öl radial hinter den Kolbenring gefördert und läuft über kolbenseitig vorgesehene Ölablaufbohrungen in den Ölsumpf ab.

Kompressionsringe haben heute die Eigenschaft, über ihre Laufflächengeometrie eine Kompression aufzubauen und wenn möglich auch eine gute Abstreifwirkung zu erzielen. Beide Anforderungen sind nicht immer mit einem Ring umsetzbar.

Der Erfindung liegt die Aufgabe zugrunde, einen Kompressionskolbenring bereit zu stellen, der unter Einsatz einer neuen Laufflächengestaltung die genannten Anforderungen, nämlich Kompression aufzubauen und eine gute Abstreifwirkung zu erzielen, erfüllt.

Diese Aufgabe wird dadurch gelöst, dass beide Stege in Kontakt mit einer Gegenlauffläche als Lauffläche fungieren, wobei der im Gebrauch untere Steg zumindest partiell parallel zur Gegenlauffläche verläuft und zum Aufbau der Kompression dient und der obere Steg unter einen definierten Winkel zur Gegenlauffläche verläuft und mit einer Innenfase versehen ist, so dass er als Nasenminutenelement eine scharfkantige Nase aufweist, und dass zumindest die beiden Stege mit einer Laufflächenbeschichtung versehen sind. Vorteilhafte Weiterbildungen des Erfindungsgegenstandes sind den Unteransprüchen zu entnehmen.

Der untere Steg ist bevorzugt ballig ausgebildet und kann, bezogen auf die Steghöhe, symmetrisch ballig vorgesehen werden.

Zur Erhöhung der Abstreifwirkung ist der obere Steg mit einer Innenfase zu versehen.

Einem weiteren Gedanken der Erfindung gemäß, sind zumindest die beiden Stege des Kompressionskolbenringes mit einer PVD-Schicht versehen.

Die erfindungsgemäße Laufflächengestaltung ist besonders vorteilhaft einsetzbar bei ein- oder zweiseitigen Trapezkolbenringen.

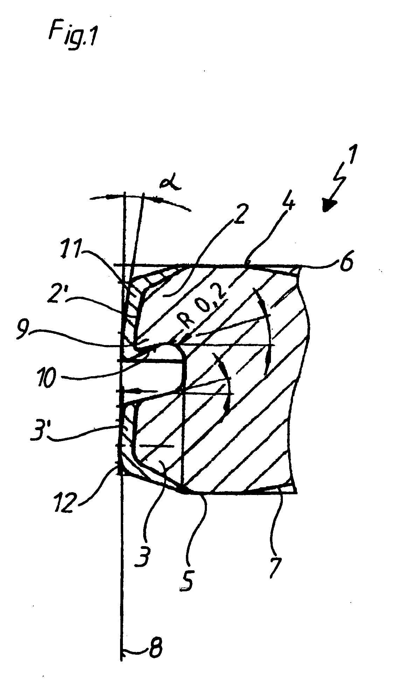

Der Erfindungsgegenstand ist anhand eines Ausführungsbeispiels in der Zeichnung dargestellt und wird wie folgt beschrieben.

Die einzige Figur zeigt den erfindungsgemäßen Kompressionskolbenring 1 als Teildarstellung. Der Kompressionskolbenring 1 weist zwei die Lauffläche bildende Stege 2,3 auf. Ferner ist eine obere Flankenfläche 4 und eine untere Flankenfläche 5 gegeben. In diesem Beispiel soll der Kompressionskolbenring 1 als mit zwei Trapezflächen 6,7 versehener Trapezkolbenring ausgebildet sein. Der Steg 3 ist leicht ballig ausgeführt, während der Steg 2 durch ein Nasenminutenelement ausgebildet ist. Die äußere Umfangsfläche 3' des Steges 3 verläuft zumindest partiell etwa parallel zu einer Gegenlauffläche 8, während an den Steg 2 eine unter einem definierten Winkel δ zur Gegenfläche 8 verlaufende Minute Nute 2' angearbeitet ist, so dass eine relativ scharfkantige Nase 9 gebildet wird, die eine gute Abstreifwirkung herbeiführt. Der Steg 3 dient hierbei zum Aufbau der Kompression. Zur weiteren Erhöhung der Abstreifwirkung ist im Bereich der Nase 9 eine Innenfase 10 vorgesehen. Beide Stege 2,3 sind in diesem Beispiel mit einer Laufllächenbeschichtung 11,12 versehen, die durch das so genannte PVD-Verfahren aufgebracht wurde.

Alternative Laufflächenbeschichtungen zur Erhöhung der Verschleißfestigkeit der Laufflächen sind ebenfalls denkbar.

## Patentansprüche

1. Kompressionskolbenring für eine Brennkraftmaschine, mit zwei übereinander angeordneten Stegen im Bereich seiner Lauffläche, wobei beide Stege (2,3) in Kontakt mit einer Gegenlauffläche (8) die Laufflächen bilden, und wobei der im Gebrauch untere (3) der beiden Stege (2,3) zumindest partiell parallel zur Gegenlauffläche (8) verläuft, **dadurch gekennzeichnet, dass** der untere Steg (3) zum Aufbau der Kompression dient und der obere Steg (2) unter einen definierten Winkel (α) zur Gegenlauffläche (10) verläuft und mit einer Innenfase (10) versehen ist, so dass er als Nasenminutenelement eine scharfkantige Nase (9) aufweist, und dass zumindest die beiden Stege (2,3) mit einer Laufflächenbeschichtung (11,12) versehen sind.

2. Kompressionskolbenring nach Anspruch 1, **dadurch gekennzeichnet, dass** der untere Steg (3) ballig ausgebildet ist.

3. Kompressionskolbenring nach Anspruch 1 oder 2, **dadurch gekennzeichnet, dass** der untere Steg (3) - bezogen auf die Steghöhe - symmetrisch ballig ausgebildet ist.

4. Kompressionskolbenring nach einem der Ansprüche 1 bis 3, **dadurch gekennzeichnet, dass** die Beschichtung (11,12) durch eine PVD-Schicht gebildet ist.

5. Kompressionskolbenring nach einem der Ansprüche 1 bis 4, **dadurch gekennzeichnet, dass** der Kolbenring (1) als zumindest einseitiger Trapezring ausgebildet ist.

## Claims

1. A compression piston ring for an internal combustion engine, comprising two webs placed one above the other in the area of the bearing surface of the piston ring, wherein both webs (2, 3) form the bearing surfaces when being in contact with a counter-bearing surface (8), and wherein the web which is in use the lower one (3) of the two webs (2, 3) extends at least partially in parallel to the counter-bearing surface (8), **characterized in that** the lower web (3) serves to build up the compression and the upper web (2) extends under a defined angle (α) with respect to the counter-bearing surface (10) and is provided with an internal bevel (10) such that it comprises a sharp-edged nose (9) as taper-faced Napier element and that at least the two webs (2, 3) are provided with a bearing surface coating (11, 12).

2. A compression piston ring according to claim 1, **characterized in that** the lower web (3) is crowned.

3. A compression piston ring according to claim 1 or 2, **characterized in that** the lower web (3) is symmetrically crowned with respect to the web height.

4. A compression piston ring according to one of the claims 1 through 3, **characterized in that** the coating (11, 12) is formed by a PVD layer.

5. A compression piston ring according to one of the claims 1 through 4, **characterized in that** the piston ring (1) is designed as at least unilateral trapeze ring.

## Revendications

1. Segment de piston de compression destiné à un moteur à combustion interne, comprenant deux entretoises disposées l'une au-dessus de l'autre dans la région de la surface de roulement du segment de piston, dans lequel les deux entretoises (2, 3) forment les surfaces de roulement quand elles sont en contact avec une contre-surface de roulement (8), et dans lequel l'entretoise qui est l'inférieure (3) des deux entretoises (2, 3) pendant l'utilisation s'étend au moins partiellement en parallèle à la contre-surface de roulement, **caractérisé en ce que** l'entretoise inférieure (3) sert à établir la compression et l'entretoise supérieure (2) s'étend sous un angle défini (α) par rapport à la contre-surface de roulement et est munie d'un chanfrein intérieur de sorte qu'elle comprend un nez à angles vifs (9) en tant que élément bec d'aigle conique, et que l'au moins les deux entretoises (2, 3) sont munies d'un revêtement de surfaces de roulement (11, 12).

2. Segment de piston de compression selon la revendication 1, **caractérisé en ce que** l'entretoise inférieure (3) est bombée.

3. Segment de piston de compression selon la revendication 1 ou la revendication 2, **caractérisé en ce que** l'entretoise inférieure (3) est symétriquement bombée par rapport à la hauteur d'entretoise.

4. Segment de piston de compression selon l'une des revendications 1 à 3, **caractérisé en ce que** le revêtement (11, 12) est formé par une couche en PVD.

5. Segment de piston de compression selon l'une des revendications 1 à 4, **caractérisé en ce que** le segment de piston (1) est configuré comme anneau de trapèze au moins unilatéral.
